# EUROPÄISCHE PATENTSCHRIFT

(11) **EP 1 350 896 B1**
(45) Veröffentlichungstag und Bekanntmachung des Hinweises auf die Patenterteilung: **26.04.2006**
(21) Anmeldenummer: 03001096.1
(22) Anmeldetag: 20.01.2003
(51) Int. Cl.: E03C 1/10, F16K 15/06, E03B 7/07, F24D 3/10

(54) **Ventilanordnung für einen Rohrtrenner**
Valve arrangement for a back flow preventer
Arrangement de soupapes pour un disjoncteur hydraulique

(30) Priorität: 03.04.2002 DE 10214747
(43) Veröffentlichungstag der Anmeldung: 08.10.2003
(73) Patentinhaber: HANS SASSERATH & CO KG, 41352 Korschenbroich (DE)
(72) Erfinder: Hecking, Willi, 41238 Mönchengladbach (DE)
(74) Vertreter: Weisse, Renate

(56) Entgegenhaltungen:
- EP-A- 0 183 909
- EP-A- 1 004 715
- WO-A-95/00784
- AU-B- 606 060
- DE-A- 2 424 978
- DE-A- 10 029 656
- DE-C- 4 231 494
- DE-U- 7 108 532

## Beschreibung

Die Erfindung betrifft eine Ventilanordnung für einen Rohrtrenner zum Trennen eines aus einem Trinkwassersystem auf- oder nachfüllbaren Brauchwassersystem von diesem Trinkwassersystem, mit einem stromaufwärtigen und einem stromabwärtigen Rückflußverhinderer, die gleichachsig angeordnet und beide in Richtung von dem Brauchwassersystem zu dem Trinkwassersystem schließen, und einem Entlastungsventil, das von dem Druck des Trinkwassersystems in Schließrichtung beaufschlagt ist und über das der Raum zwischen den Rückflußverhinderern bei Wegfall dieses Druckes mit einem Ablauf verbindbar ist, wobei das Entlastungsventil eine zu den Rückflußverhinderern gleichachsige, verschiebbar in dem Armaturengehäuse geführte, als Ventilschieber des Entlastungsventils wirkende Hülse aufweist, die auf einer Stirnfläche von dem Trinkwasserdruck und auf der gegenüberliegenden Stirnfläche von einer sich an einem Gehäuse des stromabwärtigen Rückflußverhinderers abstützende Druckfeder und dem Druck in einem Raum zwischen den Rückflußverhinderern beaufschlagt ist und durch den in der Schließstellung eine mit dem Ablauf verbundene seitliche Ablauföffnung des Rohrtrennergehäuses gegenüber Einlaß und Auslaß abdeckbar ist, der stromaufwärtige Rückflußverhinderer in dem Ventilschieber und der stromabwärtige Rückflußverhinderer in einem im Rohrtrennergehäuse sitzenden Mantel gehaltert ist.

Das Brauchwassersystem kann beispielsweise ein Heizungssystem sein. Ein solches Heizungssystem wird aus einem Trinkwassersystem, der Trinkwasserleitung, gefüllt oder nachgefüllt. Es muß unter allen Umständen verhindert werden, daß etwa bei einem Druckabfall im Trinkwassersystem Wasser aus dem Brauchwassersystem in das Trinkwassersystem zurückfließt. Zu diesem Zweck sind "Rückflußverhinderer" vorgesehen. Das sind federbelastete Rückschlagventile, die unter dem Einfluß des Trinkwasserdrucks nur in Richtung vom Trinkwassersystem zum Brauchwassersystem hin öffnen. Für den Dauerbetrieb wird jedoch auch dies nicht als ausreichend angesehen.

Vielmehr ist nach Abschluß des Füll- oder Nachfüllvorganges eine physische Trennung zwischen Trinkwassersystem und Brauchwassersystem vorgeschrieben, beispielsweise durch Füllen oder Nachfüllen über einen Schlauch, der nach Abschluß des Füll- oder Nachfüllvorganges entfernt wird. Dadurch wird sichergestellt, daß auch über undichte Absperrventile oder Rückflußverhinderer kein Brauchwasser in das Trinkwassersystem gelangen kann.

Da das Entfernen des Schlauchs nach dem Füll- oder Nachfüllvorgang lästig ist und auch nicht kontrolliert werden kann sind feste Installationen von "Rohrtrennern" bekannt (beispielsweise EP 0 972 995 A1). Diese bekannten Rohrtrenner enthalten einen stromaufwärtigen, d.h. auf der Seite des Trinkwassersystems angeordneten, und einen stromabwärtigen, d.h. auf der Seite des Brauchwassersystems angeordneten Rückflußverhinderer. Beide Rückflußverhinderer öffnen in Richtung auf das Brauchwassersystem hin. Zwischen den Rückflußverhinderern ist ein druckgesteuertes Entlastungsventil angeordnet. Dieses Entlastungsventil ist von dem Trinkwasserdruck gesteuert und öffnet automatisch, wenn der Trinkwasserdruck wegfällt oder absinkt. Wenn somit das Brauchwassersystem aus dem Trinkwassersystem gefüllt oder nachgefüllt wird und ein dafür ausreichender Trinkwasserdruck vorhanden ist, dann wird das Entlastungsventil von diesem Druck geschlossen. Es fließt Trinkwasser über die von dem Trinkwasserdruck aufgedrückten Rückflußverhinderer in das Brauchwassersystem. Wenn aber der Trinkwasserdruck unter ein vorgegebenes Maß absinkt, sei es weil ein Absperrventil das Trinkwassersystem absperrt, z.B. weil der Trinkwasserdruck aus irgendeinem Grund zusammenbricht, öffnet das Entlastungsventil. Selbst wenn dann über einen lecken Rückflußverhinderer Brauchwasser aus dem Brauchwassersystem zurückfließt, fließt dieses zurückfließende Brauchwasser über den Ablaufab und kann auf keinen Fall in das Trinkwassersystem gelangen.

Bei einer bekannten Konstruktion weist das Entlastungsventil einen hülsenförmigen Ventilkörper auf, der mit einem ringförmigen Ventilsitz an einem im wesentlichen rohrförmigen Rohrtrennergehäuse zusammenwirkt. Der Ventilkörper ist durch eine Feder in Richtung auf die Offenstellung vorbelastet. Die Rückflußverhinderer und der Ventilkörper sind gleichachsig in dem Rohrtrennergehäuse angeordnet. Der Ventilkörper stützt sich kraftschlüssig an einer in dem Rohrtrennergehäuse verschiebbar geführten Platte ab, an welcher stromauf wiederum die Belastungsfeder des stromaufwärtigen Rückflußverhinderers abgestützt ist. Bei Vorhandensein eines ausreichenden Drucks im Trinkwassersystem wird der Ventilkörper über die verschiebbare Platte gegen die Wirkung der Feder auf den Ventilsitz gedrückt. Dann wird der stromaufwärtige Rückflußverhinderer aufgedrückt. Das einströmende Trinkwasser drückt den stromabwärtigen Rückflußverhinderer auf ("Water Regulations Guide" herausgegeben von WRAS, 6.15).

Bei dem bekannten Rohrtrenner sind die Druckverhältnisse nicht genau definiert und nicht verifizierbar. Die Stellbewegung des Ventilkörpers in die Offenstellung wird nur durch die auf den Ventilkörper wirkende Feder bewirkt, die den Ventilkörper bei einem Ausweichen der Platte in kraftschlüssiger Anlage an dieser halten muß.

Diese sogenannten Rohrtrenner des Typs CA sind für eine bestimmte Risikoklasse des Brauchwassers gedacht. Es gibt Brauchwasserklassen mit einem höheren Verschmutzungsgrad und entsprechend höherem Risiko. Für die Trennung solchen Brauchwassers vom Trinkwasser werden die beschriebenen Rohrtrenner als nicht ausreichend angesehen. Die Normen schreiben hier Rohrtrenner des sogenannten Typs BA mit erhöhter Sicherheit vor.

Diese wird erreicht, indem zwischen dem stromaufwärtigen und dem stromabwärtigen Rückflußverhinderer eine Mitteldruckzone vorgesehen ist und das Entlastungsventil von der Druckdifferenz zwischen Trinkwassersystem und Mitteldruckzone differenzdruckgesteuert ist, so daß in jeder hydraulischen Situation gewährleistet wird, daß ein Druckgefälle vom Trinkwassersystem zur Mitteldruckzone vorhanden ist. Bekanntermaßen ist das Entlastungsventil von einer Membran gesteuert, an welcher die Druckdifferenz wirksam ist. Tritt Brauchwasser in die Mitteldruckzone zwischen den Rückflussverhinderern ein, so erhöht sich der Druck in der Mittelduckzone, und das Entlastungsventil öffnet um eine gleichbleibende Druckdifferenz zu erhalten ("Water Regulations Guide" herausgegeben von WRAS, 6.14).

Bei den Rohrtrennem vom Typ BA sind an dem Rohrtrennergehäuse Prüfanschlüsse zum Anschluß von Manometern vorgesehen, mittels derer die Drücke von Trinkwasser und Brauchwasser und der "Miteldruck" im Raum zwischen den Rückflußverhinderern gemessen werden können.

Die bekannten Rohrtrenner mit differenzdruckgesteuertem Entlastungsventil sind aufwendig gebaut. Die Reinigung und Wartung ist schwierig, weil die einzelnen Bauteile nicht oder nur schwer zugänglich sind. Für Rohrtrenner vom Typ CA und für Rohrtrenner vom Typ BA werden grundsätzlich unterschiedliche Ventilanordnungen benutzt.

Es sind Rohrtrenner bekannt, die denen jeweils ein Einlaß und ein damit fluchtender Auslaß gebildet ist. Quer zu der Achse von Einlaß und Auslaß zweigt von einem Mitteldruckraum ein Ablaufanschluß ab. Dem Einlaß ist ein einlaßseitiger Rückflußverhinderer nachgeschaltet, und dem Auslaß ist ein auslaßseitiger Rückflußverhinderer vorgeschaltet. Beide Rückflußverhinderer öffnen in Richtung vom Einlaß zum Auslaß hin. Dabei sitzt der einlaßseitige Rückflußverhinderer in einem hülsenförmigen Ventilschließkörper eines Entlastungsventils, der in einem Armaturengehäuse abdichtend, axial beweglich geführt ist. Der Ventilschließkörper ist durch eine Druckfeder in Öffnungsrichtung vorgespannt. Wenn auf die Eingangsseite der Leitungsdruck wirksam und größer als der Druck auf der Ausgangsseite ist, wird der hülsenförmige Ventilkörper von dem Leitungsdruck in Anlage an einen am Auslaß vorgesehenen Ventilsitz gedrückt. Dadurch wird die Verbindung zu dem Raum, von dem Ablauf abgeht, unterbrochen. Danach öffnen die Rückflußverhinderer, die mit stärkeren Federn in Schließrichtung belastet sind.

Diesen Grundaufbau haben die Rohrtrenner, wie sie in der DE 42 31 494 C1,der DE-U 7108532, der AU-B-73188/87, der DE 100 29 656 A1 und der WO 95/00784 beschrieben sind. Dabei sind die Bauteile einzeln in einem in die Wasserleitung installierten Armaturengehäuse montiert. Die Wartung wird daher schwierig

Die WO 95/00784 zeigt in Fig.4 einen Rohrtrenner, bei welchem Einlaß und Auslaß mit der Achse des Armaturengehäuses einen Winkel bilden, so daß die Enden des die Ventile enthaltenden Armaturengehäuses frei liegen und nach Abnehmen von Endstücken das Innere des Armaturengehäuses zu Wartungszwecken zugänglich ist. Auch hier sind aber die funktionellen Bauteile des Rohrtrenners einzeln in das Armaturengehäuse eingebaut.

Die EP 0 183 909 A2 beschreibt einen Rohrtrenner, bei welchem in einem zylindrischen Armaturengehäuse ein hülsenförmiger Schieber axial verschiebbar geführt ist. Zu diesem Zweck ist der Schieber an seinen Enden in Kolben gehalten, die in dem Armaturengehäuse geführt sind, so daß der Schieber koaxial in dem Gehäuse gehalten ist. Schieber und Kolben bilden ein hantelartiges Gebilde. Bei einer anderen Ausführung ist der Schieber durch zwei Membranen gehalten. Einlaßseitig und auslaßseitig von dem Schieber sitzen Rückflußverhinderer, durch welche die Längsbohrung des Schiebers abschließbar sind. In dem Armaturengehäuse ist ein Ablauf gebildet, der von dem Ringraum zwischen Schieber und Armaturengehäuse abgeht. Das Armaturengehäuse weist auslaßseitig von dem Ablauf einen verengten Abschnitt auf. In diesem Abschnitt sind in axialem Abstand voneinander zwei Dichtringe vorgesehen. Der Schieber weist in seiner Mitte seitliche Fenster auf, die in der Betriebsstellung, d.h. bei Wasserdurchlauf, zwischen den Dichtringen liegen und dadurch abgeschlossen sind. In der Ruhestellung wird der Schieber durch eine Feder gegen den Ventilschließkörper des einlaßseitigen Rückflußverhinderers gedrückt. Die Fenster liegen frei, so daß eine Verbindung zu dem Ablauf hergestellt ist. Der Ventilschließkörper des auslaßseitigen Rückflußverhinderers liegt unter dem Einfluß einer Feder an der Stirnfläche des Schiebers an und schließt den Längskanal des Schiebers ab. Auch bei dieser Konstruktion sind die verschiedenen Teile des Rohrtrenners einzeln in dem Armaturengehäuse montiert.

Die EP 1 004 715 A1 beschreibt einen Rohrtrenner, mit einem zylindrischen Gehäuse, das in der Mitte einen Ablaufstutzen aufweist. In dem Gehäuse ist einlaßseitig ein hülsenförmiges Ventilschließglied mit einem auslaßseitigen Dichtflansch geführt. Das Ventilschließglied ist von einem federnden Balgen umgeben. Innerhalb des hülsenförmigen Ventilschließgliedes sitzt ein Rückflußverhinderer. Auslaßseitig ist in dem Gehäuse ein Hohlzylinder angeordnet, der an seiner einlaßseitigen Stirnfläche einen Ventilsitz bildet, welcher mit einer Dichtung an dem Dichtflansch des Ventilschließgliedes zusammenwirkt. In dem Hohlzylinder sitzt ein zweiter Rückflußverinderer. Das Gehäuse ist über Zuganker zwischen zwei Anschlußflanschen des Leitungssystems gehalten. Nach entfernen eines Zugankers kann das gesamte zylindrische Gehäuse ausgebaut werden. Das Gehäuse bildet hier ein Armaturengehäuse, das einen Teil des Leitungssystems bildet. Die Abdichtung beim Schließen des Ablaufventils erfolgt zwischen der Stirnfläche der Hülse und einem Ventilsitz.

Die DE 24 24 978 A beschreibt einen Rohrtrenner mit einem zylindrischen Armaturengehäuse, das einen seitlichen Ablaufstutzen aufweist. In dem Armaturengehäuse ist ein hülsenförmiger Ventilschließkörper axial verschiebbar geführt. Der Ventilschließkörper ist in Öffnungsrichtung von einer Schraubenfeder belastet. In dem Armaturengehäuse sitzt auslaßseitig ein Hohlzylinder mit einem Ventilsitz.. Der hülsenförmige Ventilschließkörper ist mit seiner Stirnfläche gegen die Wirkung der Schraubenfeder an den Ventilsitz anlegbar. In dem Ventilschließkörper und in dem Hohlzylinder sitzen einlaßseitige bzw. auslaßseitige Rückflußverhinderer. Die Bauteile des Rückflußverhinderers sind einzeln in dem Armaturengehäuse montiert.

Es ist Aufgabe dieser Erfindung, einen Rohrtrenner zu schaffen, der einfach zu reinigen und zu warten ist.

Der Erfindung liegt weiter die Aufgabe zugrunde, eine Ventilanordnung zu schaffen, die gleichermaßen für Rohrtrenner vom Typ CA wie für Rohrtrenner vom Typ BA verwendbar sind.

Erfindungsgemäß werden die genannten Aufgaben durch die Merkmale des Anspruchs 1 gelöst, wobei
(a) der Mantel des stromabwärtigen Rückflußverhinderers an seinem stromaufwärtigen Ende einen Flansch aufweist
(b) der Ventilschieber an seinem stromabwärtigen Ende einen Kranz von axialen, federnden Fingern aufweist, die in die Ausnehmungen des Flansches geführt sind und mit innenliegenden Nasen federnd hinter den Flansch greifen, und
(c) die Druckfeder an dem Flansch abgestützt ist und an dem Ventilschieber zur Erzeugung einer in Öffnungsrichtung wirkenden Vorlast anliegt.

Der Ventilschieber bildet in jeder Stellung definierte Stirnflächen. Auf die eine Stirnfläche wirkt der Druck des Trinkwassersystems, auf die andere Stirnfläche wirkt der Mitteldruck aus dem Raum zwischen den Rückflußverhinderern. Durch die Belastungsfeder ist der Ventilschieber in Richtung auf die Offenstellung vorbelastet. Der Mitteldruck muß stets um einen durch die Belastungsfeder bestimmten Betrag unter dem Druck im Trinkwassersystem liegen. Die Rückflußverhinderer und der Ventilschieber sind gleichachsig angeordnet. Der stromaufwärtige Rückflußverhinderer sitzt dabei fest in dem Ventilschieber. Die Rückflußverhinderer und der Ventilschieber bilden einschließlich der Belastungsfeder eine geschlossene Baugruppe von zylindrischer Grundform. Eine solche Baugruppe kann in ein Rohrtrennergehäuse eingesetzt werden, das eine entsprechend zylindrische Ausnehmung, darin die Dichtungen und dazwischen die vom Ventilschieber beherrschte seitliche Ablauföffnung enthält. Dieses Rohrtrennergehäuse kann ein einfaches, im wesentlichen rohrförmiges Gehäuse sein. Dann erhält man einen Rohrtrenner vom Typ CA. Die gleiche Baugruppe kann aber zur Herstellung eines Rohrtrenners vom Typ BA in ein anderes, mit Prüfanschlüssen versehenes Rohrtrennergehäuse eingesetzt werden. Auch dieses Rohrtrennergehäuse für den Rohrtrenner vom Typ BA wird einfacher als beim Stand der Technik. Es ergibt sich weiterhin der Vorteil, daß die gesamte Ventilanordnung mit Rückflußverhinderern und Ventilschieber zu Wartungszwecken bequem als geschlossene Baugruppe ausgebaut werden kann.

Ausgestaltungen der Erfindung sind Gegenstand des Unteranspruchs.

Ausführungsbeispiele der Erfindung sind nachstehend unter Bezugnahme auf die zugehörigen Zeichnungen näher erläutert.
- Fig.1: ist eine perspektivische Darstellung eines einfachen Rohrtrenners vom Typ CA.
- Fig.2: ist ein Längsschnitt des Rohrtrenners von Fig.1, wobei das Entlastungsventil in seiner Offenstellung ist.
- Fig.3: ist ein Längsschnitt des Rohrtrenners ähnlich Fig.2, wobei aber das Entlastungsventilin seiner Schließstellung ist.
- Fig.4: ist eine perspektivische Darstellung einer Einzelheit.
- Fig.5: ist eine perspektivische Darstellung eines Rohrtrenners vom Typ BA mit Prüfanschlüssen zur Kontrolle der verschiedenen Drücke.
- Fig.6: ist ein Längsschnitt des Rohrtrenners von Fig.4, wobei das Entlastungsventil in seiner Offenstellung ist.
- Fig.7: ist ein Längsschnitt des Rohrtrenners ähnlich Fig.5, wobei aber das Entlastungsventil in seiner Schließstellung ist.
- Fig.8: zeigt eine Draufsicht auf den Rohrtrenner von Fig.4 bis 6.
- Fig.9: zeigt einen Schnitt längs der Linie C - C von Fig.7.

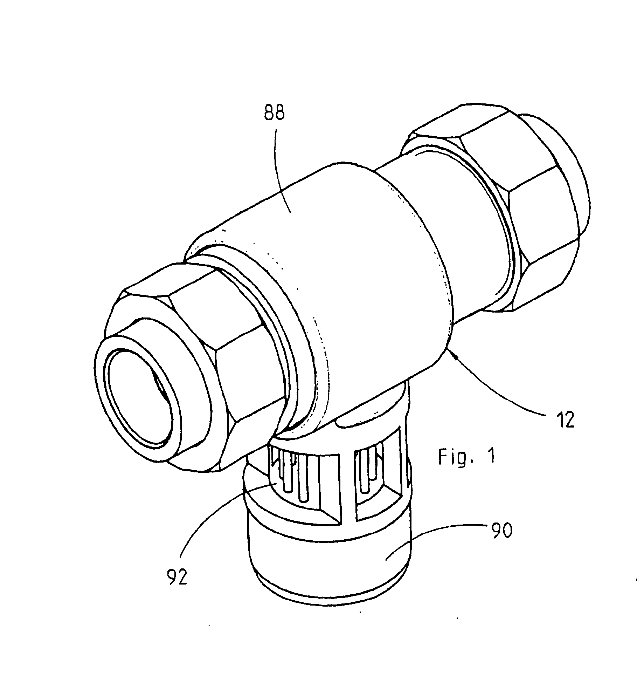

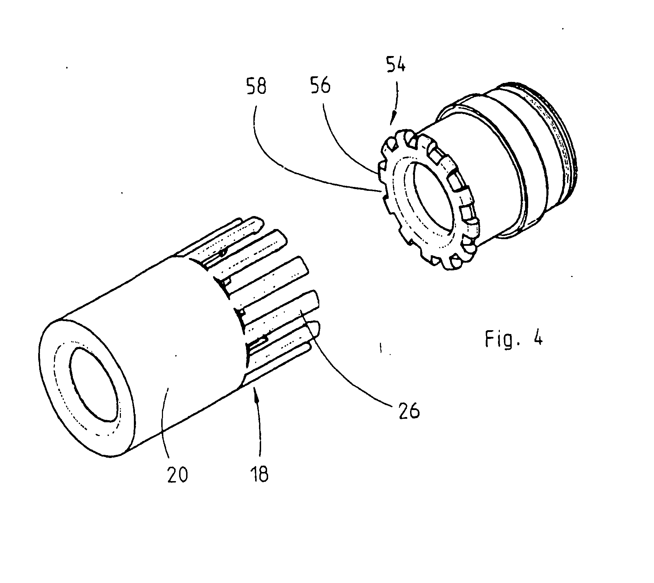

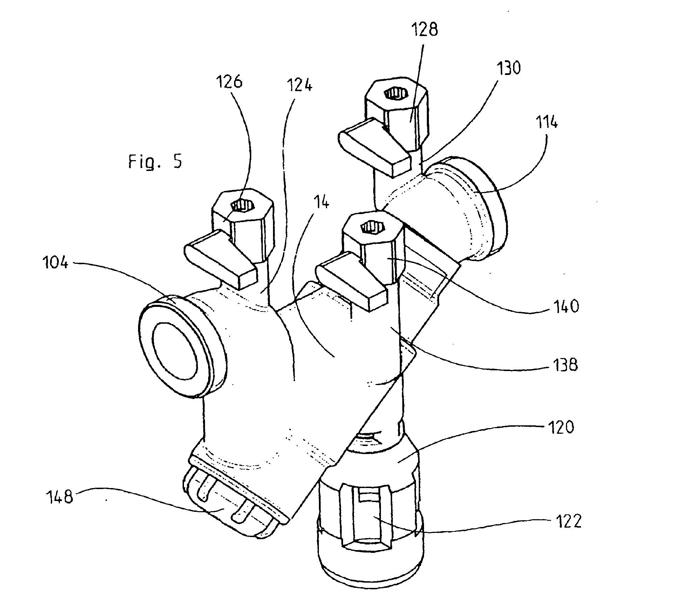

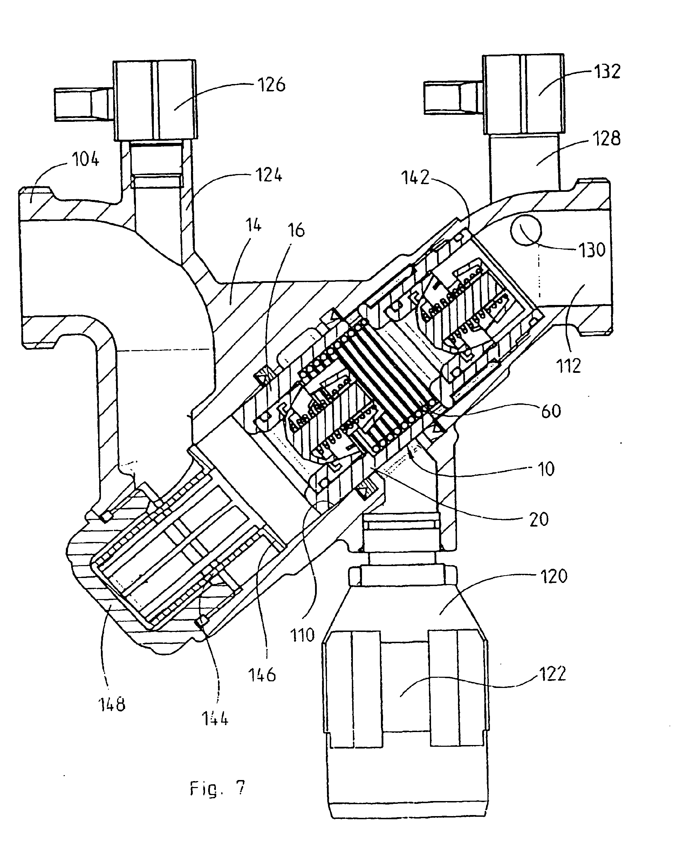

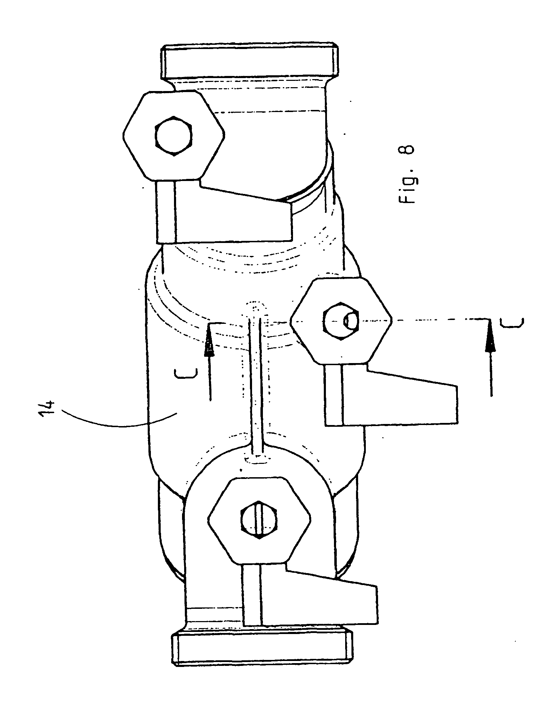

Den beiden Rohrtrennern von Fig.1 bis 3 einerseits und von Fig.4 bis 6 andererseits ist eine als geschlossene Baugruppe 10 ausgebildete Ventilanordnung gemeinsam. Diese Baugruppe 10 hat zylindrische Grundform. Die Baugruppe 10 ist herausnehmbar entweder in ein im wesentlichen rohrförmiges Rohrtrennergehäuse 12 (Fig.1 bis 4) oder in ein Rohrtrennergehäuse 14 (Fig.5 bis 9) einsetzbar. Im ersteren Fall ergibt sich ein Rohrtrenner vom Typ CA, im letzteren Fall ergibt sich ein Rohrtrenner vom Typ BA.

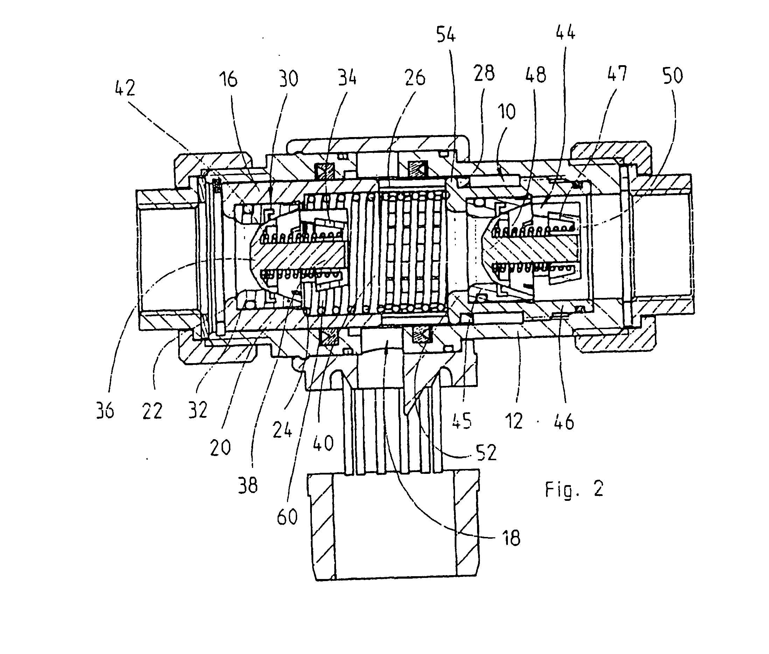

In Fig.2 ist mit 16 ein Ventilschieber bezeichnet. Der Ventilschieber 16 bildet einen Teil des Entlasungsventils 18. Der Ventilschieber 16 bildet eine zylindrische Hülse 20. Die Hülse 20 weist an ihrem stromaufwärtigen Ende (links in Fig.2) einen nach innen vorstehenden Rand 22 auf. Die Innenwandung der Hülse 20 bildet eine Stufe 24. An dem stromabwärtigen Ende sind an der Hülse 20 im Abstand voneinander federnde Finger 26 in einem gleichmäßigen Kranz angeformt. An ihren Enden bilden die federnden Finger 26 einwärts ragende Nasen 28.

In der Hülse 20 des Ventilschiebers 16 sitzt ein stromaufwärtiger Rückflußverhinderer.30.bildet einen Ventilsitz 32. Der Ventilsitz 32 liegt an dem Rand 22 an. Mit dem Ventilsitz 32 ist über Stege ein Federwiderlager 34 verbunden. Ein pilzförmiger Ventilschließkörper 36 ist mit einem Schaft 38 in einem zentralen Durchbruch 40 des Federwiderlagers 34 geführt. Eine Schraubenfeder 42 stützt sich an dem Federwiderlager 34 ab und drückt den Ventilschließkörper 36 gegen den Ventilsitz 32. Ein solcher Rückflußverhinderer ist ein gängiges, üblicherweise aus Kunststoff hergestelltes Bauteil. Der Ventilschließkörper 36 kann durch Druck im Trinkwassersystem aufgedrückt werden und gestattet Wasserfluß zu einem Brauchwassersystem. Bei einem Rückfluß schließt der Rückflußverhinderer 30 und verhindert das Eintreten von Brauchwasser in das Trinkwassersystem.

Ein stromabwärtiger Rückflußverhinderer 44 sitzt in einem zylindrischen Mantel 46. Der Rückflußverhinderer 44 ist im wesentlichen in gleicher Weise aufgebaut wie der stromaufwärtige Rückflußverhinderer 30. Der Rückflußverhinderer 44 weist einen Ventilsitz 45 und ein damit verbundenes Federwiderlager 47 sowie einen pilzförmigen Ventilschließkörper 48 auf. Der Ventilschließkörper 48 wird durch eine Schraubenfeder 50, die sich an dem Federwiderlager 47 abstützt, gegen den Ventilsitz 45 gedrückt. Der stromabwärtige Rückflußverhinderer 44 öffnet für eine Strömung zum Brauchwassersystem hin und verhindert einen Rückfluß aus dem Brauchwassersystem. Der Ventilsitz 45 liegt an einem nach innen vorstehenden Rand 52 des Mantels 46 an.

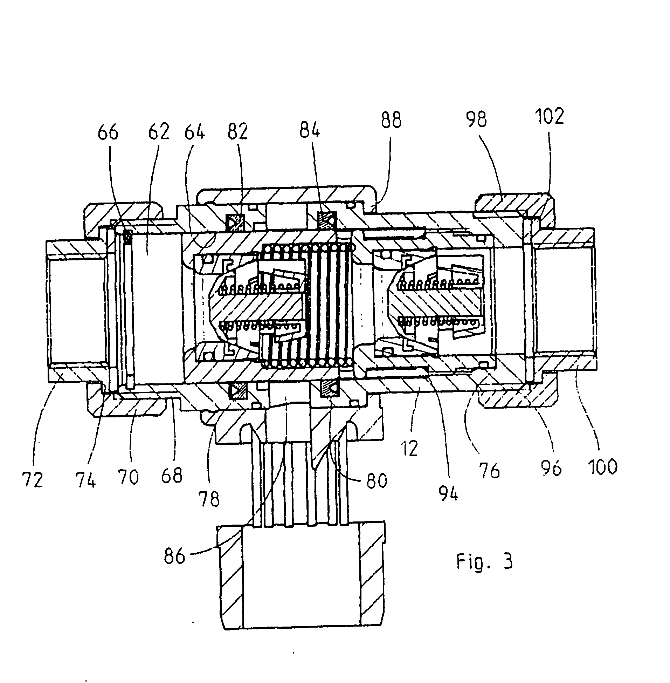

Der Mantel 46 hat einen nach außen vorstehenden Flansch 54. Der Flansch 54 ist zinnenartig ausgebildet und weist eine Kranz von radialen Vorsprüngen 56 in regelmäßiger Anordnung und dazwischen liegende Lücken 58 auf. Die federnden Finger 26 des Ventilschiebers 16 erstrecken sich zwischen den Vorsprüngen 56 durch die Lücken 58 und greifen mit ihren Nasen 28 hinter den inneren Teil des Flansches 54. Eine Schraubenfeder 60 stützt sich an dem Flansch 54 ab und liegt an der Stufe 24 auf der Innenwandung der Hülse 20 an. Dadurch werden der Ventilschieber 16 und der stromabwärtige Rückflußverhinderer 44 von der Schraubenfeder 60 federnd auseinander gedrückt, bis die Nasen 28 an dem Flansch 54 zur Anlage kommen. Der Ventilschieber 16 kann gegen die Wirkung der Schraubenfeder 60 nach rechts in Fig.2 gedrückt werden, wie in Fig.3 dargestellt ist. Dabei sind die federnden Finger 26 zwischen den zinnenartigen Vorsprüngen 56 geführt.

Die Vorspannung der Schraubenfeder 42 ist größer als die Vorspannung der Schraubenfeder 60. Der stromaufwärtige Rückflußverhinderer 30 öffnet daher unter dem Druck im Trinkwassersystem erst, wenn vorher der Ventilschieber 16 gegen die Wirkung der Schraubenfeder nach rechts in Fig.2 vorbewegt wurde, wie in Fig.3 dargestellt ist. Die Schraubenfeder 50 des Rückflußverhinderers 44 ist dagegen verhältnismäßig schwach.

Auf diese Weise bildet die Ventilanordnung eine geschlossene, zusammenhängende Baugruppe, die als Ganzes in ein geeignetes Rohrtrennergehäuse eingesetzt werden und ggf. zu Wartungszwecken ausgebaut werden kann.

Bei der Ausführung nach Fig.1 bis 4 ist eine solche Ventilanordnung in ein Gehäuse 12 von rohrförmiger Grundform zur Herstellung eines Rohrtrenners vom Typ CA eingebaut.

Das Gehäuse 12 bildet eine Gehäusebohrung 62 mit einer zylindrischen Innenwandung 64. Ein Sprengring 66, an welchem die Stirnfläche der Hülse 20 zur Anlage kommt, sichert die Ventilanordnung links in Fig.2 in der Gehäusebohrung 62. Ein Gewindestutzen 68 nimmt eine Überwurfmutter 70 auf, welche einen Rohranschluß 72 mit einem Flansch 74 gegen die Stirnfläche des Gehäuses 12 festzieht. Die Innenwandung 64 bildet stromabwärts, links inFig.2, eine Stufe 76. An der Stufe 76 kommt der Mantel 46 zur Anlage.

In der Innenwandung 64 des Gehäuses 12 sind im Abstand voneinander zwei Umfangsnuten 78 und 80 angebracht. In diesen Umfangsnuten 78 und 80 sitzen Dichtungen 82 bzw. 84. Die Dichtungen liegen an der Mantelfläche des Ventilschiebers 16 an. Dadurch wird eine definierte Fläche festgelegt, auf welcher Drücke auf den Ventilschieber 16 wirken. Zwischen den Dichtungen sind seitliche Ablaßöffnungen 86 gebildet. Um das Gehäuse 12 herum erstreckt sich ein Ring 88, der abdichtend auf dem Gehäuse 12 geführt ist. An dem Ring 88 sitzt ein Ablaßstutzen 90. Der Ablaßstutzen 90 steht über seitliche Öffnungen 92 mit der Atmosphäre in Verbindung. Der Ring gestattet es, den Ablaßstutzen 90 unabhängig von der Winkellage des Gehäuses 12 stets nach unten ragen zu lassen.

Die Innenwandung 64 des Gehäuses bildet eine weitere Stufe 94, an welcher die Finger 26 beim Zusammendrücken der Feder 60 zur Anlage kommen.

An dem in Fig.2 und 3 rechten Ende weist das Gehäuse wieder ein Gewinde 96 auf, auf welches eine Überwurfmutter 98 aufgeschraubt ist. Die Überwurfmutter zieht einen Rohranschluß 100 mit einem Flansch 102 gegen die Stirnfläche des Gehäuses 12 fest.

Der beschriebene Rohrtrenner arbeitet wie folgt:
Wenn der Rohrtrenner, z.B. durch Öffnen eines Füllventils, mit dem Trinkwassersystem verbunden ist, dann wirkt der normalerweise hohe Druck des Trinkwassersystems auf die in Fig.2 linke Stirnseite des Ventilschiebers, während auf der rechten Seite des Ventilschiebers zunächst Atmosphärendruck herrscht. Der Rückflußverhinderer 30 bleibt zunächst geschlossen. Der Ventilschieber 16 wird gegen die Schraubenfeder 60 nach rechts in Fig.2 gedrückt bis in eine Stellung, wie sie in Fig.3 dargestellt ist. Die Finger 26 gleiten dabei zwischen den Vorsprüngen 56 und werden von diesen geführt. Die Hülse 20 schiebt sich dabei über die Dichtung 84 und deckt dadurch die Abflußöffnung 86 ab. Jetzt öffnet der stromaufwärtige Rückflußverhinderer 30. Das eintretende Trinkwasser drückt den durch eine schwächere Feder belasteten stromabwärtigen Rückflußverhinderer 44 auf. Es kann jetzt Trinkwasser in das Brauchwassersystem strömen, bis das Brauchwassersystem gefüllt ist und der stromabwärtige Rückflußverhinderer 44 schließt..

Bei einem Absinken des Drucks im Trinkwassersystem schließt zunächst der stromaufwärtige Rückflußverhinderer. Dann wird der Ventilschieber 16 von der Schraubenfeder 60 zurückgedrückt und gibt die Abflußöffnung 86 frei. Das gleiche geschieht, wenn der Druck im Brauchwassersystem aus irgendeinem Grunde ansteigt und sich über einen undichten stromabwärtigen Rückflußverhinderer 44 in dem Raum zwischen den Rückflußverhinderern 30 und 44 ein erhöhter Mitteldruck aufbaut derart, daß die Druckdifferenz zwischen dem Druck im Trinkwassersystem und dem Mitteldruck nicht mehr ausreicht, die Federkraft der Schraubenfeder 60 zu überwinden. Es ist sichergestellt, daß diese Druckdifferenz einen durch die Schraubenfeder 60 bestimmten Wert nicht unterschreiten und daher kein Brauchwasser in das Trinkwassersystem zurückgedrückt werden kann.

Bei der Ausführung nach den Figuren 5 bis 9 sitzt die vorstehend beschriebene Baugruppe 10 in einem anderen Rohrtrennergehäuse 14.

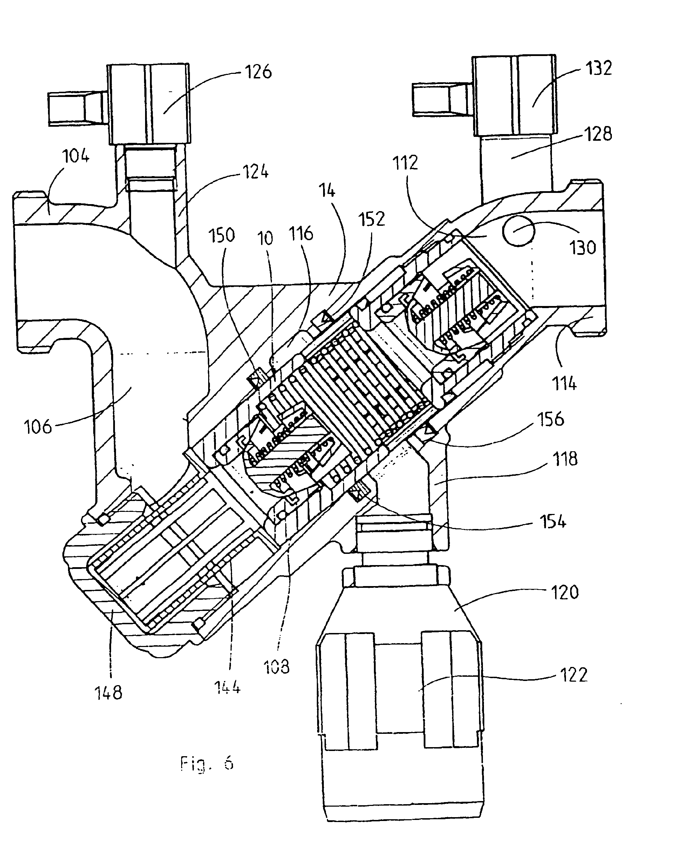

Das Rohrtrennergehäuse 14 weist einen in Fig.6 waagerechten Einlaßanschluß 104 auf, der mit einem um 90° nach unten gekrümmten Einlaßkanal 106 verbunden ist. Der Einlaßkanal 106 mündet in einer in dem Rohrtrennergehäuse 14 schräg nach oben verlaufenden Bohrung 108 mit einer im wesentlichen zylindrischen Innenwandung 110. Die Bohrung 108 geht an ihrem oberen Ende in einen Auslaßkanal 112 über, der mit einem Auslaßanschluß 114 verbunden ist. Einlaßanschluß 104 und Auslaßanschluß 114 sind gleichachsig zueinander angeordnet, so daß das Rohrtrennergehäuse 14 in eine gerade Rohrleitung eingebaut werden kann. Im Mittelbereich erweitert sich die Bohrung 108 zu einem Ringraum 116. Von dem Ringraum 116 geht ein nach unten ragender Ablaßstutzen 118 ab. In dem Ablaßstutzen 118 sitzt ein Ablaßteil 120, das wie der Ablaßstutzen 90 in Fig.1 über seitliche Öffnungen 122 mit der Atmosphäre in Verbindung steht.

Von dem Einlaßkanal 106 ist ein nach oben ragender Prüfstutzen 124 abgezweigt, der durch ein Ventil 126 absperrbar ist. An diesen Prüfstutzen 124 kann ein Manometer angesetzt werden, welches den Druck im Einlaßkanal 106, also den Druck im Trinkwassersystem zu messen gestattet. Mit dem Auslaßkanal 112 ist ein nach oben ragender Prüfstutzen 128 über einen Kanal 130 verbunden. Der Prüfstutzen 128 ist durch ein Ventil 132 absperrbar. An diesen Prüfstutzen 128 kann ein Manometer angesetzt werden, welches den Druck im Auslaßkanal 112, also den Druck im Brauchwassersystem zu messen gestattet.

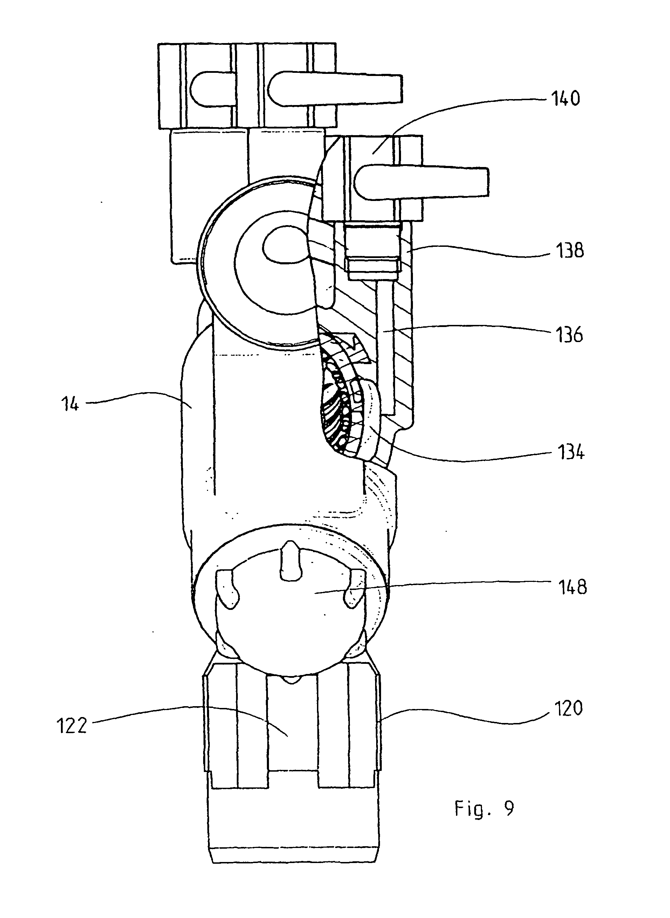

In der Innenwandung 110 der Bohrung 108 ist ein längs der Bohrung verlaufender, zu der Bohrung hin offener Kanal 134 (Fig.9) gebildet. Der Kanal 134 ist über einen Verbindungskanal 136 mit einem nach oben ragenden Prüfstutzen 138 verbunden. Der Prüfstutzen 138 ist durch ein Ventil 140 absperrbar. An den Prüfstutzen 138 kann ein Manometer angesetzt werden, welches den "Mitteldruck" zwischen den Rückflußverhinderern zu messen gestattet.

In die Bohrung 108 ist von dem offenen Ende links unten in Fig.6 her eine Baugruppe 10 der beschriebenen Art eingeschoben. Die Baugruppe 10 legt sich mit der Stirnfläche des Mantels 46 (Fig2) an eine Stufe 142 zwischen Bohrung 108 und Auslaßkanal 112 an. In die Bohrung 108 ist dann ein Filter 144 mit einem Flansch 146 eingesetzt. Die Bohrung ist dann mit einer eingeschraubten Kappe 148 verschlossen. Der Ventilschieber 16 liegt bei geöffnetem Entlastungsventil unter dem Einfluß der Schraubenfeder 60 mit der Stirnfläche der Hülse 20 an dem Flansch 146 des Filters 144 an.

Beiderseits des Ringraumes 116 sind in der Innenwandung 110 der Bohrung 108 Umfangsnuten 150 und 152 vorgesehen. In diesen Umfangsnuten sitzen Dichtungen 154 bzw. 156.

Die Baugruppe 10 entspricht in Aufbau und Wirkungsweise der Ventilanordnung von Fig.2 und 3 und ist daher nicht nochmals im einzelnen beschrieben. Der Ringraum 116 und die Dichtungen 154 und 156 haben die gleiche Funktion wie die Auslaßöffnung 86 und die Dichtungen 78 und 80 bon Fig.2. Mit dem Gehäuse 14 ist eine Kontrolle der verschiedenen auftretenden Drücke und damit auch der Funktion des Rohrtrenners möglich. Es handelt sich bei der Ausführung von Fig.5 bis 9 um einen Rohrtrenner vom Typ BA.

## Patentansprüche

1. Ventilanordnung für einen Rohrtrenner zum Trennen eines aus einem Trinkwassersystem auf- oder nachfüllbaren Brauchwassersystem von diesem Trinkwassersystem, mit einem im eingebanlen Zustand der Ventilanordnung stromaufwärtigen und einem stromabwärtigen Rückflußverhinderer (30 bzw. 44), die gleichachsig angeordnet und beide in Richtung von dem Brauchwassersystem zu dem Trinkwassersystem schließen, und einem Entlastungsventil, das von dem Druck des Trinkwassersystems in Schließrichtung beaufschlagt ist und über das der Raum zwischen den Rückflußverhinderern (30,44) bei Wegfall dieses Druckes mit einem Ablauf (90;120) verbindbar ist, wobei das Entlastungsventil eine zu den Rückflußverhinderern gleichachsige, verschiebbar in dem Armaturengehäuse geführte, als Ventilschieber des Entlastungsventils wirkende Hülse (16) aufweist, die auf einer Stirnfläche von dem Trinkwasserdruck und auf der gegenüberliegenden Stirnfläche von einer sich an einem Gehäuse des stromabwärtigen Rückflußverhinderers abstützende Druckfeder (50) und dem Druck in einem Raum zwischen den Rückflußverhinderern (30,44) beaufschlagt ist und durch den in der Schließstellung eine mit dem Ablauf (90;120) verbundene seitliche Ablauföffnung (86;116) des Rohrtrennergehäuses (12;14) gegenüber Einlaß und Auslaß abdeckbar ist, der stromaufwärtige Rückflußverhinderer (30) in dem Ventilschieber (16) und der stromabwärtige Rückflußverhinderer in einem im Rohrtrennergehäuse sitzenden Mantel gehaltert ist.
**dadurch gekennzeichnet, daß**
(a) der Mantel (46) des stromabwärtigen Rückflußverhinderers (44) an seinem stromaufwärtigen Ende einen Flansch (54) aufweist
(b) die als Ventilschieber (16) wirkende Hülse an ihrem stromabwärtigen Ende einen Kranz von axialen, federnden Fingern (26) aufweist, die in Ausnehmungen (58) des Flansches (54) geführt sind und mit innenliegenden Nasen (28) federnd hinter den Flansch (54) greifen, und
(c) die Druckfeder (60) an dem Flansch (54) abgestützt ist und an dem Ventilschieber (16) zur Erzeugung einer in Öffnungsrichtung wirkenden Vorlast anliegt.
(d) so daß die Rückflußverhinderer (30,44) und das Entlastungsventil zu einer geschlossenen, zusammenhängenden gegen die Druckfeder zusammendrückbaren Baugruppe (10) vereinigt sind, die als Ganzes herausziehbar in ein die Trink- und Brauchwasseranschlüsse und den Ablauf (90;120) aufweisendes Rohrtrennergehäuse (12;14) einsetzbar sind.

2. Ventilanordnung nach Anspruch 1, **dadurch gekennzeichnet, daß** der Flansch (54) zinnenartig mit radial auswärts gerichteten Vorsprüngen (56) zwischen den dazwischenliegenden Ausnehmungen (58) ausgebildet ist, wobei die federnden Finger (26) durch die Ausnehmungen (58) zwischen den Vorsprüngen (56) greifen.

## Claims

1. Valve assembly of a pipe disconnector for separating a service water system from a drinking water system which is arranged to be filled up or re-filled from this drinking water system comprising an upstream and downstream backflow preventer (30, 44) for the installed valve assembly, which both close in the direction from the service water system to the drinking water system the backflow preventers being coaxial and a relief valve, which is exposed to the pressure of the drinking water system in the closing direction and by which is adapted to connect the space between the backflow preventers (30, 44) to an outlet (90; 120) when this pressure ceases, the relief valve being provided with a sleeve (16) acting as a slide valve for the relief valve, the sleeve being pressurized on its end face by the drinking water pressure and on the opposite surface by a compression spring (50) supported on the casing of the downstream backflow preventer and the pressure in the space between the backflow preventers (30, 44), and by which slide valve a lateral outlet opening (86; 116) in the casing of the pipe disconnector (12; 14) connected to the outlet (90; 120) is arranged to be covered with respect to the inlet and the outlet when it is in a closed position, the upstream backflow preventer (30) is held in the slide valve (16) and the downstream backflow preventer is held in a sleeve in the casing of the pipe disconnector,
**characterized in that**
(a) the casing (46) of the downstream backflow preventer (44) is provided with a flange at its upstream end,
(b) the sleeve acting as a slide valve (16) is provided with a ring of axial resilient fmgers (26) at its downstream end guided in gaps (58) of the flange (54) and extending behind the flange (54) with inwardly extending projections (28), and
(c) the compression spring (60) is supported on the flange (54) and engages the slide valve (16) for generating a bias towards the opening direction,
(d) so that the backflow preventers (30, 44) and the relief valve are combined to form a structural unit (10) adapted to be pressed against the compression spring which is designed to be set in or removed as a whole, into or from, respectively, a pipe disconnector casing (12; 14) provided with a drinking-and service water connection and the outlet (90; 120).

2. Valve assembly according to claim 1, **characterized in that** the flange (54) is crenellated with radial outwardly extending projections (56) and gaps (58) therebetween, the resilient fmgers (26) extending through said gaps (58) between the projections.

## Revendications

1. Disposition de soupape pour un disconnecteur hydraulique destiné à séparer un système d'eau sanitaire pouvant être alimenté ou rempli par un système d'eau potable de ce système d'eau potable, présentant un clapet anti-retour (30 et 44 respectivement), en amont et en aval une fois la disposition de soupape installée, qui sont disposés sur le même axe et ferment tous les deux dans le sens allant du système d'eau sanitaire vers le système d'eau potable, ainsi qu'une soupape de décharge à laquelle est appliquée la pression du système d'eau potable dans le sens de fermeture et par l'intermédiaire de laquelle l'espace situé entre les clapets anti-retour (30,44) peut communiquer avec un dispositif d'écoulement (90;120) en cas de pression nulle, la soupape de décharge présentant une douille (16) faisant effet de tiroir de la soupape de décharge qui se trouve sur le même axe que les clapets anti-retour en pouvant se déplacer dans le corps de robinetterie et qui est sollicitée, sur l'une des faces avant, par la pression de l'eau potable et, sur l'autre face avant opposée, par la pression d'un ressort de compression (50) s'appuyant contre le corps du clapet anti-retour situé en aval et par la pression régnant dans un espace situé entre les clapets anti-retour (30,44), et permettant de recouvrir en position de fermeture par rapport à l'admission et à la sortie un orifice d'écoulement (86;116) latéral du corps du disconnecteur hydraulique (12;14), communiquant avec le dispositif d'écoulement (90;120), le clapet anti-retour situé en amont (30) étant maintenu dans le tiroir de soupape (16) et le clapet anti-retour situé en aval étant maintenu dans une gaine située dans le disconnecteur hydraulique,
**caractérisée en ce que**
(a) la gaine (46) du clapet anti-retour situé en aval (44) présentant à son extrémité située en amont une bride (54),
(b) la douille agissant en tiroir de soupape (16) présentant à son extrémité située en aval une couronne de doigts (26) axiaux élastiques qui sont disposés dans des évidements (58) de la bride (54) et mordent à l'aide de cames (28) intérieures à l'arrière de la bride (54) de façon élastique, et
(c) le ressort de compression (60) s'appuyant contre la bride (54) et s'appliquant contre le tiroir de soupape (16) afin de générer une précharge agissant dans le sens d'ouverture,
(d) de sorte que les clapets anti-retour (30,44) et la soupape de décharge sont réunis sous forme de bloc de composants (10) fermé et compact, pouvant être compressé contre le ressort de compression et pouvant être utilisé en une seule pièce, de façon amovible, dans un corps de disconnecteur hydraulique (12;14) présentant les raccords d'eau potable et d'eau sanitaire ainsi que le dispositif d'écoulement (90;120).

2. Disposition de soupape selon la revendication 1, **caractérisée en ce que** la bride (54) est crénelée et présente des saillies (56) dirigées radialement vers l'extérieur situées entre les évidements (58) placés entre celles-ci, les doigts élastiques (26) mordant à travers les évidements (58) situés entre les saillies (56).
